# FASCICULE DE BREVET EUROPEEN

(11) **EP 3 184 930 B1**
(45) Date de publication et mention de la délivrance du brevet: **07.04.2021**
(21) Numéro de dépôt: 16202489.7
(22) Date de dépôt: 06.12.2016
(51) Int. Cl.: F24H 9/02, F24H 9/12, F24D 3/18, F24D 19/10

(54) **AGENCEMENT CONSTITUE D'UNE INSTALLATION FRIGORIFIQUE ET D'UN BATIMENT**
ANORDNUNG AUS EINER KÜHLANLAGE UND EINEM GEBÄUDE
ARRANGEMENT MADE UP OF A REFRIGERATING SYSTEM AND A BUILDING

(30) Priorité: 21.12.2015 FR 1562972
(43) Date de publication de la demande: 28.06.2017
(73) Titulaire: Société Industrielle de Chauffage (SIC), 59660 Merville (FR)
(72) Inventeur: ANTOINE, Emmanuel, 59270 Bailleul (FR); CLEMENT, Jean-Francis, 85000 La Roche-Sur-Yon (FR)
(74) Mandataire: Ipsilon

(56) Documents cités:
- WO-A2-02/37595
- AT-U1- 2 168
- FR-A1- 2 554 565
- US-A- 5 038 580

## Description

L'invention concerne un agencement constitué d'une installation frigorifique et d'un bâtiment selon le préambule de la revendication 1. Un tel agencement est connu du document WO 02/37595 A2.

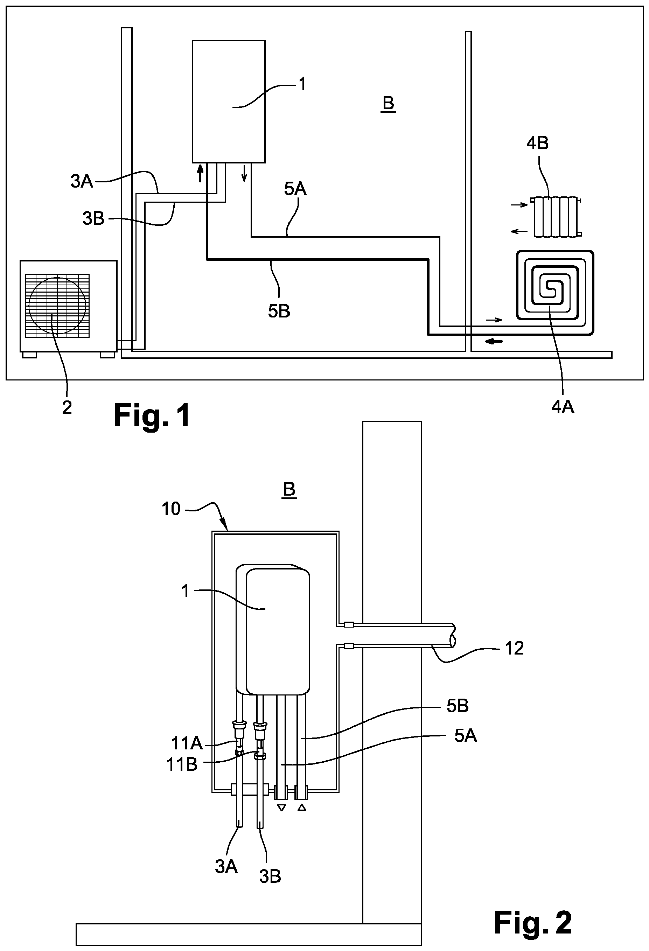

Elle se rapporte plus précisément à une installation frigorifique connue d'un bâtiment telle que représentée sur la figure 1. Ce type d'installation comporte un module intérieur 1 au bâtiment B, constitué d'une machine frigorifique 1, et un module 2 extérieur au bâtiment, ces deux modules étant reliés l'un à l'autre par des conduites de fluide frigorigène 3A, 3B. Une installation de ce type constitue une pompe à chaleur qui récupère des calories de l'air, du sol ou d'eau grâce à un échangeur de chaleur contenu dans le module extérieur 2. Les calories sont transmises par le fluide frigorigène à un échangeur contenu dans le module intérieur 1, qui chauffe de l'eau transmise par une liaison hydraulique 5A à un émetteur hydraulique, par exemple un plancher chauffant 4A ou un radiateur 4B, en circuit fermé, l'eau refroidie étant retourné au module intérieur 1 par une liaison hydraulique 5B de retour.

A l'intérieur du bâtiment, les conduites de fluide frigorigène 3A, 3B sont connectées au moyen de raccords aux conduits d'entrée et de sortie de l'échangeur. Ces raccords sont disposés à l'extérieur du module interne.

Actuellement est couramment utilisé en tant que fluide frigorigène le R410A qui est un fluide frigorigène remplaçant le R22 selon le protocole de Montréal pour des applications de froid positif. Il est composé à 50 % de R32 (difluorométhane) et à 50 % de R125 (pentafluoroéthane) .

Pour des raisons environnementales, d'autres gaz frigorigènes présentant un coefficient GWP (acronyme de « Global Warming Power ») plus faibles sont envisagés, comme par exemple le R32 pur, le propane ou une hydrofluoro-oléfine.

Cependant ces autres gaz frigorigènes peuvent être plus inflammables et/ou plus toxiques que le R410A et il importe de considérer le risque que présentent ces gaz à l'intérieur d'un bâtiment et de gérer les risques de fuite de ces gaz.

L'invention résout ce problème en proposant une barrière étanche entre la machine frigorifique intérieure et le bâtiment, pouvant être mise en place par l'installateur et empêchant la présence de fluide frigorigène dans l'habitation en cas de fuite.

Pour ce faire, l'invention propose un agencement constitué d'une installation frigorifique et d'un bâtiment, l'installation comportant au moins un échangeur thermique compris dans une machine frigorifique intérieure au bâtiment et parcouru par un fluide frigorigène, caractérisé en ce qu'il comporte un caisson étanche contenant ladite machine frigorigène et comportant un conduit étanche débouchant à l'extérieur du bâtiment.

Bien que particulièrement destinée à une machine frigorifique de type pompe à chaleur telle que précédemment décrite, l'invention s'applique à toute installation frigorifique comportant au moins un échangeur thermique compris dans une machine frigorifique intérieure au bâtiment et parcouru par un fluide frigorigène comme par exemple une installation de climatisation, un chauffe-eau ou un émetteur thermodynamique tel un radiateur. Cette installation peut être à deux modules séparés comme précédemment décrit en référence à la figure 1 ou être monobloc, les deux modules frigorifiques étant assemblés en un seul bloc intérieur au bâtiment.

Le conduit étanche est alors de préférence disposé en tenant compte de la densité du fluide frigorigène, par exemple en partie basse du caisson, afin d'assurer une meilleure évacuation de ce fluide.

Selon un mode de réalisation préféré, l'agencement dont ledit échangeur thermique est raccordé à une amenée et à une évacuation d'un fluide frigorigène par des conduites frigorifiques connectées au moyen de raccords aux conduits d'entrée et de sortie dudit échangeur, est caractérisé en ce que ledit caisson étanche contient également lesdits raccords et est traversé de façon étanche par lesdites conduites frigorifiques.

Les fuites de fluide se situent la plupart du temps sur des composants de la machine frigorifique ou sur les raccords de conduites et, grâce à l'invention, ces fuites sont confinées dans le caisson étanche et évacuées par le conduit étanche vers l'extérieur du bâtiment, sans risque d'introduction à l'intérieur de ce bâtiment.

De préférence, ladite amenée et ladite évacuation du fluide frigorigène est la sortie et l'entrée d'un second module frigorifique extérieur au bâtiment.

Selon l'invention, ledit caisson étanche ou ledit conduit étanche contient un détecteur de présence dudit fluide frigorigène.

Le confinement du fluide frigorigène dans le caisson facilite également la détection d'une fuite, par exemple par détection de différence de densité.

Le conduit étanche disposé selon la densité du fluide, par exemple en partie basse du caisson, assure une détection rapide.

Avantageusement, ledit caisson est également traversé de façon étanche par des liaisons hydrauliques et/ou électriques de la machine frigorifique.

Ledit caisson peut comporter un ventilateur.

Selon un mode de réalisation, ledit caisson contient également une chaudière combinée à ladite machine frigorifique, ledit conduit étanche contenant un second conduit d'évacuation des fumées de la chaudière et ledit caisson étant traversé de façon étanche par des liaisons hydrauliques, combustibles et électriques de la chaudière.

Ladite chaudière peut comporter un ventilateur équipé d'une prise d'air disposé dans ledit caisson.

De préférence, ledit caisson est traversé de façon étanche par lesdits conduites frigorifiques et/ou lesdites liaisons hydrauliques et/ou électriques au moyen de pièces de type passe-cloisons ou presse-étoupes.

L'invention est décrite ci-après plus en détail à l'aide de figures ne représentant que des modes de réalisation préférés.
La figure 1 et une vue schématique d'une installation frigorifique d'un bâtiment, connue, précisée plus haut.
La figure 2 est une vue en coupe longitudinale selon un premier mode de réalisation.
La figure 3 est une vue en coupe longitudinale selon un deuxième mode de réalisation, qui tombe sous le libellé de la revendication 1.
La figure 4 est une vue en coupe longitudinale selon un troisième mode de réalisation.
La figure 5 est une vue en coupe longitudinale selon un quatrième mode de réalisation.
La figure 6 est une vue en coupe longitudinale de détail selon une première variante de réalisation.
Les figures 7A et 7B sont des vues en perspective et en coupe longitudinale de détail selon une seconde variante de réalisation.

Comme illustrée sur les figures 2 à 5, une installation frigorifique d'un bâtiment B comporte un échangeur thermique compris dans une machine frigorifique intérieure 1 au bâtiment et raccordé à une amenée et à une évacuation d'un fluide frigorigène par des conduites frigorifiques 3A, 3B connectées au moyen de raccords 11A, 11B aux conduits d'entrée et de sortie de l'échangeur.

Selon l'invention, l'installation comporte un caisson étanche 10 contenant la machine frigorifique 1 et ces raccords 11A, 11B, traversé de façon étanche par les conduites frigorifiques 10A, 10B et électriques non représentées et comportant un conduit étanche 12 débouchant à l'extérieur du bâtiment. Ce conduit étanche 12 assure l'évacuation du fluide vers l'extérieur du bâtiment en cas de fuite et évite la création d'une surpression dans le caisson 10.

Ce caisson étanche 10 est de préférence conçu selon les principes de caisson de chaudière de combustion, avec un assemblage de panneaux en tôle, plastique ou alliage, avec joints ou mousses d'étanchéité.

En se référant à la figure 1, l'amenée et l'évacuation du fluide frigorigène est de préférence la sortie et l'entrée d'un second échangeur thermique contenu dans un module 2 extérieur au bâtiment. Et les liaisons hydrauliques 5A, 5B connectant la machine frigorifique 1 à un plancher chauffant 4A ou un radiateur 4B traversent également de façon étanche le caisson 10.

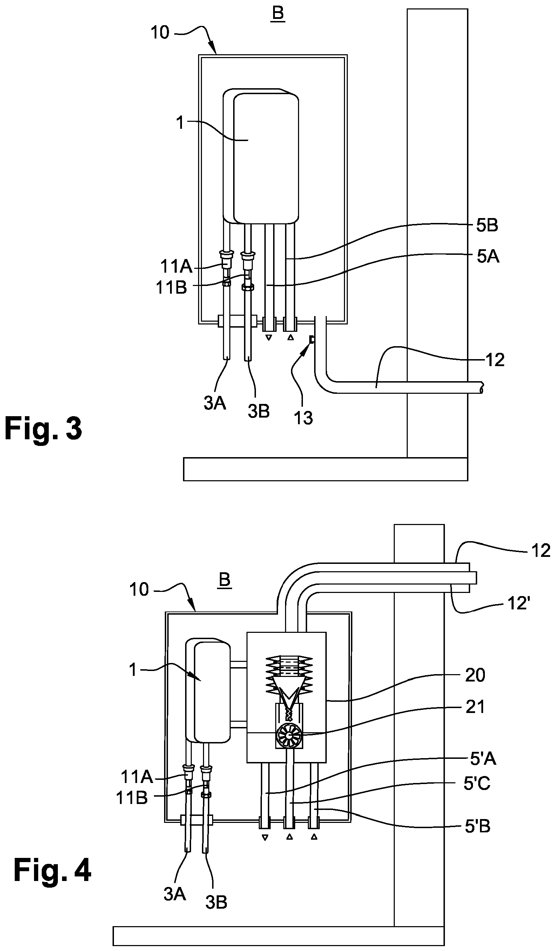

Comme illustré sur la figure 3, le conduit étanche 12 est disposé en tenant compte de la densité du fluide frigorigène, afin d'assurer une meilleure évacuation de ce fluide. Ici la densité du fluide frigorigène est supposée être supérieure à celle de l'air et le conduit étanche 12 est disposé en partie basse du caisson 10.

Le conduit étanche 12 est équipé d'un détecteur 13 de présence du fluide frigorigène, par exemple par détection de différence de densité.

La machine frigorifique 1 peut être pourvue d'un ventilateur améliorant l'évacuation des fuites de fluide frigorigène.

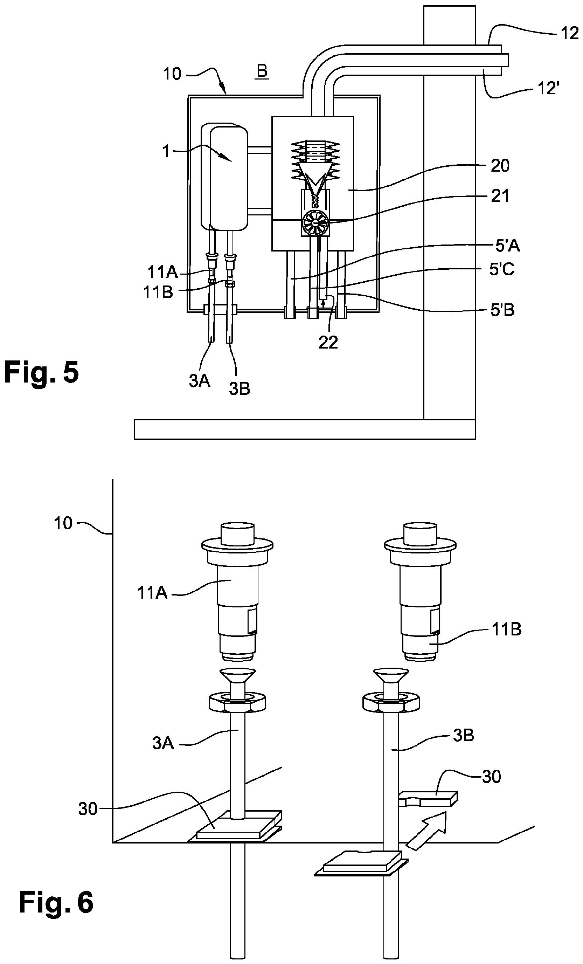

Selon les modes de réalisation représentés sur les figures 4 et 5, le caisson 10 contient également une chaudière 20 combinée à la machine frigorifique 1 qui est une pompe à chaleur.

Dans ce cas, le conduit étanche 12 contient un second conduit 12' d'évacuation des fumées de la chaudière qui est ici interne et concentrique au conduit étanche 12 et le caisson 10 est traversé de façon étanche par des liaisons hydrauliques et combustibles 5'A, 5'B, 5'C de la chaudière 20.

La chaudière 20 comporte un ventilateur 21 qui peut être équipé d'une prise d'air disposé dans le caisson 10, en tenant compte de la différence de densité du fluide frigorigène et de l'air. Comme illustré sur la figure 5, cette prise d'air 22 peut être en partie basse du caisson 10, si la densité du fluide frigorigène est supérieure à celle de l'air.

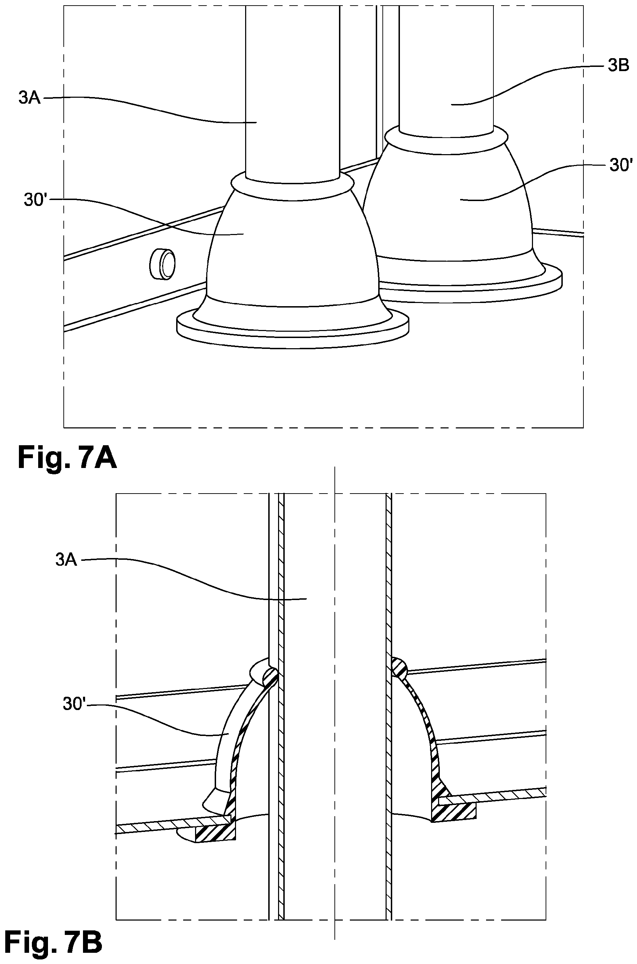

Les figures 6 et 7 représentent de façon plus détaillée des exemples d'agencements étanches assurant la traversée étanche des conduites frigorifiques et/ou des liaisons hydrauliques et/ou électriques.

La figure 6 représente des pièces 30 en élastomère en deux pièces ou fendues, bridées autour des conduites et liaison tubulaires.

Les figures 7A et 7B représentent des pièces 30' en élastomère de type passe-cloisons à membrane classiquement utilisées dans le domaine des chaudières.

## Revendications

1. Agencement constitué d'une installation frigorifique et d'un bâtiment (B), l'installation comportant au moins un échangeur thermique compris dans une machine frigorifique (1) intérieure au bâtiment et parcouru par un fluide frigorigène, l'installation comportant un caisson étanche (10) contenant ladite machine frigorigène et comportant un conduit étanche (12) débouchant à l'extérieur du bâtiment, **caractérisé en ce que** ledit caisson étanche (10) ou ledit conduit étanche (12) contient un détecteur de présence (13) dudit fluide frigorigène.

2. Agencement selon la revendication précédente, dont ledit échangeur thermique de l'installation est raccordé à une amenée et à une évacuation d'un fluide frigorigène par des conduites frigorifiques (3A, 3B) connectées au moyen de raccords (11A, 11B) aux conduits d'entrée et de sortie dudit échangeur, **caractérisé en ce que** ledit caisson étanche (10) contient également lesdits raccords (11A, 11B) et est traversé de façon étanche par lesdites conduites frigorifiques (3A, 3B).

3. Agencement selon la revendication précédente, **caractérisé en ce que** ladite amenée et ladite évacuation du fluide frigorigène est la sortie et l'entrée d'un second module frigorifique extérieur au bâtiment.

4. Agencement selon l'une des revendications précédentes, **caractérisé en ce que** ledit caisson (10) est également traversé de façon étanche par des liaisons hydrauliques (5A, 5B) et/ou électriques de la machine frigorifique.

5. Agencement selon l'une des revendications précédentes, **caractérisé en ce que** ledit caisson (10) comporte un ventilateur (21).

6. Agencement selon l'une des revendications précédentes, **caractérisé en ce que** ledit caisson (10) contient également une chaudière (20) combinée à ladite machine frigorifique (1), ledit conduit étanche (12) contenant un second conduit (12') d'évacuation des fumées de la chaudière et ledit caisson (10) étant traversé de façon étanche par des liaisons hydrauliques combustibles et électriques (5'A, 5'B, 5'C) de la chaudière.

7. Agencement selon la revendication précédente, **caractérisé en ce que** ladite chaudière (20) comporte un ventilateur (21) équipé d'une prise d'air (22) disposé dans ledit caisson (10).

8. Agencement selon l'une des revendications précédentes, **caractérisé en ce que** ledit caisson (10) est traversé de façon étanche par lesdits conduites frigorifiques et/ou lesdites liaisons hydrauliques et/ou électriques au moyen de pièces de type passe-cloisons ou presse-étoupes.

## Patentansprüche

1. Anordnung aus einer Kühlanlage und einem Gebäude (B), wobei die Anlage mindestens einen Wärmetauscher in einer Kühlmaschine (1) innerhalb des Gebäudes aufweist und der von einem Kühlfluid durchquert wird, wobei die Anlage einen dichten Kasten (10) aufweist, der die Kühlmaschine enthält und eine dichte Leitung (12) aufweist, die außerhalb des Gebäudes ausmündet, **dadurch gekennzeichnet, dass** der dichte Kasten (10) oder die dichte Leitung (12) einen Anwesenheitsdetektor (13) des Kühlfluids enthält.

2. Anordnung nach vorangehendem Anspruch, deren Wärmetauscher der Anlage an eine Zufuhr und an eine Ableitung eines Kühlfluids durch Kühlleitungen (3A, 3B) angeschlossen ist, die mit Hilfe von Anschlüssen (11A, 11B) mit den Einlass- und Auslassleitungen des Tauschers verbunden sind, **dadurch gekennzeichnet, dass** der dichte Kasten (10) ebenfalls die Anschlüsse (11A, 11B) enthält und von den Kühlleitungen (3A, 3B) dicht durchquert wird.

3. Anordnung nach vorangehendem Anspruch, **dadurch gekennzeichnet, dass** die Zufuhr und die Ableitung des Kühlfluids der Auslass und der Einlass eines zweiten Kühlmoduls außerhalb des Gebäudes sind.

4. Anordnung nach einem der vorangehenden Ansprüche, **dadurch gekennzeichnet, dass** der Kasten (10) ebenfalls von hydraulischen (5A, 5B) und/oder elektrischen Verbindungen der Kühlmaschine dicht durchquert wird.

5. Anordnung nach einem der vorangehenden Ansprüche, **dadurch gekennzeichnet, dass** der Kasten (10) einen Lüfter (21) aufweist.

6. Anordnung nach einem der vorangehenden Ansprüche, **dadurch gekennzeichnet, dass** der Kasten (10) ebenfalls einen mit der Kühlmaschine (1) kombinierten Heizkessel (20) enthält, wobei die dichte Leitung (12) eine zweite Rauchgasableitungsleitung (12') des Heizkessels enthält und der Kasten (10) von den hydraulischen Brennstoff- und elektrischen Verbindungen (5'A, 5'B, 5'C) des Heizkessels dicht durchquert wird.

7. Anordnung nach vorangehendem Anspruch, **dadurch gekennzeichnet, dass** der Heizkessel (20) einen mit einem Lufteinlass (22) ausgerüsteten Lüfter (21) aufweist, der in dem Kasten (10) angeordnet ist.

8. Anordnung nach einem der vorangehenden Ansprüche, **dadurch gekennzeichnet, dass** der Kasten (10) von den Kühlleitungen und/oder den hydraulischen und/oder elektrischen Verbindungen mit Hilfe von Teilen vom Typ Wanddurchführungen oder Stopfbuchsen dicht durchquert wird.

## Claims

1. An arrangement made up of a refrigerating system and a building (B), the system including at least one heat exchanger comprised in a refrigerating machine (1) inside the building and traveled through by a refrigerant, the system including a tight box (10) containing said refrigerating machine and including a tight pipe (12) opening to the outside of the building, **characterized in that** said tight box (10) or said tight pipe (12) contains a presence detector (13) detecting the presence of said refrigerant.

2. The arrangement according to the preceding claim, whereof the heat exchanger of the system is connected to a supply and a discharge of the refrigerant by refrigerant pipes (3A, 3B) connected via connectors (11A, 11B) to the inlet and outlet pipes of said exchanger, **characterized in that** said tight box (10) also contains said connectors (11A, 11B) and is passed through tightly by said refrigerant pipes (3A, 3B).

3. The arrangement according to the preceding claim, **characterized in that** said supply and said discharge of the refrigerant is the outlet and the inlet of a second refrigerant module outside the building.

4. The arrangement according to one of the preceding claims, **characterized in that** said box (10) is also passed through tightly by hydraulic (5A, 5B) and/or electrical connections of the refrigerating machine.

5. The arrangement according to one of the preceding claims, **characterized in that** said box (10) includes a fan (21).

6. The arrangement according to one of the preceding claims, **characterized in that** said box (10) also contains a boiler (20) combined with said refrigerating machine (1), said tight pipe (12) containing a second pipe (12') for discharging fumes from the boiler and said box (10) being passed through tightly by hydraulic fuel and electrical connections (5'A, 5'B, 5'C) of the boiler.

7. The arrangement according to the preceding claim, **characterized in that** each boiler (20) includes a fan (21) equipped with an air intake (22) disposed in said box (10).

8. The arrangement according to one of the preceding claims, **characterized in that** said box (10) is passed through tightly by said refrigerant pipes and/or said hydraulic and/or electrical connections using parts of the bulkhead adapter or cable gland type.
